(19) Europäisches Patentamt
European Patent Office
Office européen des brevets

(11) Veröffentlichungsnummer: **0 046 237**
**B1**

# (12) EUROPÄISCHE PATENTSCHRIFT

(45) Veröffentlichungstag der Patentschrift: **22.02.84**

(51) Int. Cl.³: **C 09 B 41/00,** C 09 B 44/04, C 09 B 67/34, C 09 B 67/54

(21) Anmeldenummer: **81106117.5**

(22) Anmeldetag: **05.08.81**

(54) **Verfahren zur Herstellung von Lösungen kationischer Azofarbstoffe.**

(30) Priorität: **16.08.80 DE 3030918**

(43) Veröffentlichungstag der Anmeldung: **24.02.82 Patentblatt 82/8**

(45) Bekanntmachung des Hinweises auf die Patenterteilung: **22.02.84 Patentblatt 84/8**

(84) Benannte Vertragsstaaten: **CH DE FR GB IT LI**

(56) Entgegenhaltungen:
**BE - A - 744 495**
**DE - A - 1 644 323**
**DE - A - 2 139 311**
**FR - A - 1 355 911**
**FR - A - 1 578 454**
**FR - A - 2 110 324**
**FR - A - 2 219 204**
**GB - A - 1 612 665**
**GB - A - 2 009 208**
**US - A - 2 478 767**

(73) Patentinhaber: **BAYER AG, Zentralbereich Patente, Marken und Lizenzen, D-5090 Leverkusen 1, Bayerwerk (DE)**

(72) Erfinder: **Linhart, Karl, Dr., Heymannstrasse 65, D-5090 Leverkusen (DE)**
Erfinder: **Gleinig, Harald, Dr., Eichholzer Weg 100, D-5068 Odenthal-Neschen (DE)**
Erfinder: **Boehmke, Günther, Dr., Kurt-Schumacher-Ring 152, D-5090 Leverkusen (DE)**
Erfinder: **Breig, Kurt, Dr., Leopold-Gmelin-Strasse 80, D-5000 Köln 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

# Verfahren zur Herstellung von Lösungen kationischer Azofarbstoffe

Die vorliegende Erfindung betrifft ein Verfahren zur Herstellung konzentrierter, salzarmer, stabiler Lösungen kationischer Azofarbstoffe der Formel

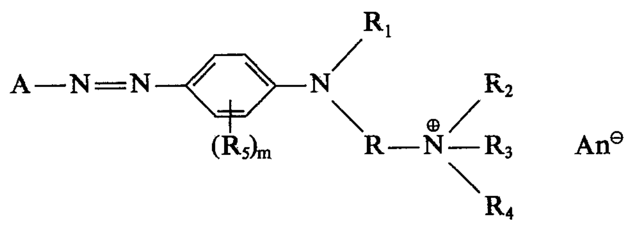

(I)

worin

A den Rest einer aromatisch-carbocyclischen oder aromatisch-heterocyclischen Diazokomponente,
R Alkylen,
$R_1$ Wasserstoff oder Alkyl,
$R_2$ Alkyl, Alkenyl oder Aralkyl,
$R_3$ Alkyl,
$R_4$ Hydroxyalkyl mit 2 und mehr C-Atomen,
$R_5$ Halogen, Alkyl, Alkoxy, Aryloxy, Acyl oder Acylamino,
m 0, 1, 2, 3 oder 4 und
$An^{(-)}$ ein Carboxylat-Ion bedeuten, und

worin die cyclischen und acyclischen Substituenten weitere nichtionische Substituenten tragen können,

durch gleichzeitige Umsetzung von Aminen der Formel

$$A-NH_2 \qquad (II),$$

Kupplungskomponenten der Formel

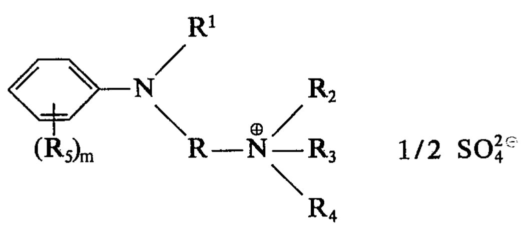

(III)

oder entsprechender Hydroxide oder Carboxylate in Gegenwart äquivalenter Mengen Schwefelsäure und Alkali- oder Erdalkalinitriten in wäßrigen Carbonsäuren und gegebenenfalls organischen wasserlöslichen Lösungsmitteln und anschließende Abtrennung der dabei auskristallisierenden Alkali- oder Erdalkalisulfate.

Die auf diese Weise hergestellten Lösungen enthalten vorzugsweise

10—60 Gew.-% des kationischen Farbstoffs,
10—80 Gew.-% einer wasserlöslichen Carbonsäure,
0—20 Gew.-% eines wasserlöslichen organischen Lösungsmittels und
3—30 Gew.-% Wasser.

Nichtionische Substituenten der Farbstoffe I sind die in der Farbstoffchemie üblichen, unter den Herstellungs- und Anwendungsbedingungen nicht dissoziierenden Substituenten wie Cyan, Hydroxy, Halogen, wie Fluor, Chlor oder Brom, Nitro, Alkyl, Mono- und Dialkylamino, Phenyl, Alkoxy, Acyloxy, Alkoxycarbonyl, Alkoxycarbonyloxy, Phenoxy, Benzyloxy, Sulfonamido, Carbonamido, Alkylsulfonyl, Phenylsulfonyl, Alkylmercapto oder Phenylmercapto.

Besonders geeignete Alkylreste sind solche mit 1—4 C-Atomen.

Besonders geeignete Reste $R_4$ sind unsubstituierte und durch $C_1—C_4$-Alkoxy, $C_2—C_4$-Alkenyloxy, Phenoxy oder Benzyloxy substituierte 2-Hydroxy-propyl- und -butylreste.

Geeignete Reste R sind z. B. geradkettige und verzweigte Alkylenreste mit 2—5 C-Atomen, die substituiert sein können; z. B. kann eine Methylengruppe durch eine Carbonylgruppe ersetzt sein.

Geeignete Arylreste sind insbesondere gegebenenfalls substituierte Phenyl- und Naphthylreste.

Geeignete Acylreste sind insbesondere Alkylcarbonyl- und Alkylsulfonylreste mit 1—4 C-Atomen im Alkylrest oder Benzoyl.

Auf diese Weise bevorzugt herstellbare Farbstoffe besitzen die Formeln

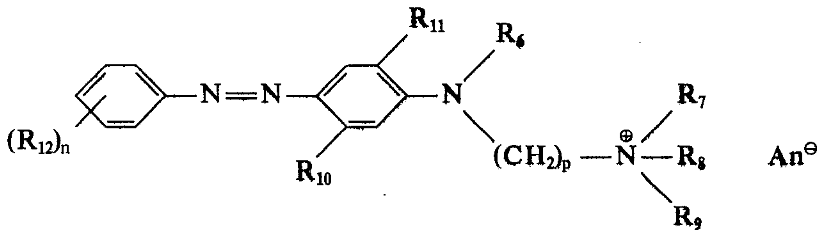
(IV)

worin

$R_6$, $R_7$, $R_8$ und $R_9$ Methyl, Ethyl, Propyl oder Butyl, 2-Hydroxyethyl, 2-Hydroxypropyl, 2-Hydroxybutyl, 2-Hydroxyethylphenyl, 2-Hydroxy-3-methoxy-propyl, 2-Hydroxy-3-chlor-propyl, 2-Hydroxy-3-ethoxy-propyl, 2-Hydroxy-3-propoxy-propyl, 2-Hydroxy-3-allyloxypropyl, 2-Hydroxy-3-butoxypropyl, 2-Hydroxy-3-phenoxy-propyl, 2-Hydroxy-3-benzoxy-propyl,

$R_{10}$ Wasserstoff, Methyl, Ethyl, Propyl, Butyl, Halogen, Methoxy, Ethoxy, Propoxy, Acetyl-, Propionyl- oder Methylsulfonylamino,

$R_{11}$ Wasserstoff, Methyl, Ethyl, Propyl, Butyl, Halogen, Methoxy, Ethoxy oder Propoxy,

$R_{12}$ Methyl, Ethyl, Propyl, Butyl, Halogen, Cyan, Nitro, Methoxy, Ethoxy, Propoxy, Methoxy- oder Ethoxycarbonyl, Acetyloxy, Acetyl, Sulfonamido oder Carbonamido,

n 1 bis 5,

p 2 oder 3 und

$An^{(-)}$ ein Carboxylat-Anion bedeuten, und

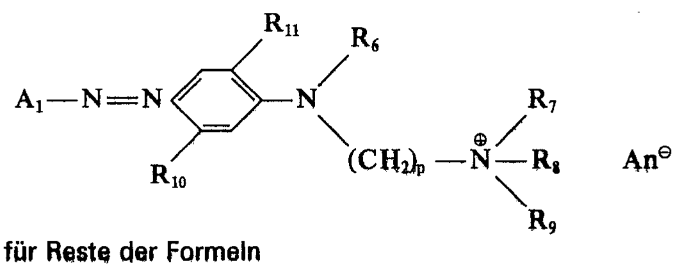
(V)

worin $A_1$ für Reste der Formeln

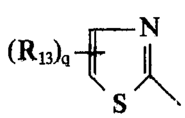 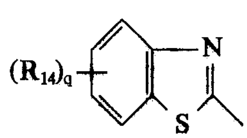 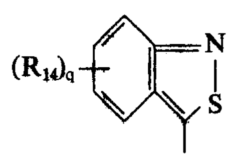 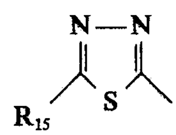 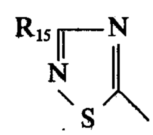

steht, in denen

$R_{13}$ $C_1$—$C_5$-Alkyl, Phenyl, Cyan, Nitro oder Carbomethoxy,

$R_{14}$ $C_1$—$C_5$-Alkyl, $C_1$—$C_4$-Alkoxy, Phenoxy, Nitro, Carbomethoxy oder Halogen,

$R_{15}$ Wasserstoff; $C_1$—$C_5$-Alkyl; $C_1$—$C_4$-Alkoxy; Phenoxy; Cyclohexyl; Phenyl; durch Methyl, Ethyl, Methoxy, Ethoxy, Nitro, Chlor oder Acetylamino substituiertes Phenyl; Benzyl; Methyl-, Ethyl- oder Phenylmercapto, Benzylmercapto; Dimethyl- oder Diethylamino oder Methyl-, Ethyl- oder Phenylsulfonyl,

q 0, 1 oder 2 bedeuten, und worin $R_6$—$R_{11}$, p und $An^{(-)}$ die in Formel IV angegebene Bedeutung haben.

Von diesem Farbstoffen sind solche bevorzugt, in denen n 1—3, q 0 oder 1, $R_6$, $R_7$ und $R_8$ Methyl oder Ethyl, $R_9$ 2-Hydroxypropyl, $R_{10}$ und $R_{11}$ Wasserstoff oder Methyl, $R_{12}$ Chlor, Brom, Cyan oder Nitro, $R_{13}$, $R_{14}$ und $R_{15}$ Wasserstoff, Phenyl oder Nitro und $An^{(-)}$ Acetat bedeuten.

Geeignete Amine II, geeignete Kupplungskomponenten III und geeignete Amine der Formel

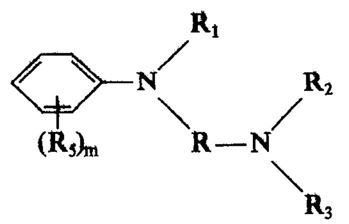

(VI)

die durch Alkoxylierung in die Kupplungskomponenten III übergeführt werden können, werden in der US-PS 4 036 826 beschrieben.

Als wasserlösliche Carbonsäuren kommen insbesondere $C_1$—$C_3$-Carbonsäuren wie Ameisen-, Essig-, Propion- und Mono-, Di- und Trichloressigsäure und Milchsäure, bevorzugt Essigsäure und Propionsäure in Betracht.

Beispiele für organische wasserlösliche Lösungsmittel sind Alkohole wie Ethanol, iso-Propanol, iso- und n-Butanol, Glykole wie Ethylenglykol, Propylenglykol, Diethylen- und Triethylenglykol, Mono- und Dialkyl-glykolether wie Methyl- und Dimethylglykol, Dimethylformamid, Caprolactam und Methylpyrolidon.

Das Verfahren wird bevorzugt in der Weise durchgeführt, daß das Amin II und die Kupplungskomponente III in der wäßrigen Carbonsäure, gegebenenfalls unter Zusatz des organischen Lösungsmittels suspendiert und auf beispielsweise 0—5° C gekühlt werden. Unter Zugabe des Nitrils, vorzugsweise des Natriumnitrits, wird dann die gleichzeitige Diazotierung und Kupplung bei 0—40° C, insbesondere bei Raumtemperatur durchgeführt. Nach beendeter Reaktion wird das ausgefallene Sulfat, vorzugsweise Natriumsulfat als 7—10-Hydrat, bei Temperaturen unter 30° C, beispielswese bei Raumtemperatur abgetrennt.

Eine weitere Variante des Verfahrens besteht in der Möglichkeit der Mischung verschiedener Diazokomponenten und einer kationischen Kupplungskomponente, die zusammen diazotiert und gekuppelt werden, um eine fertige Farbstofflösung mit dem gewünschten Farbton zu erhalten.

Das erfindungsgemäße Verfahren bietet die überraschende Möglichkeit der Herstellung hochkonzentrierter, stabiler Lösungen kationischer Farbstoffe, deren physikalische Stabilität durch den äußerst niedrigen Gehalt an anorganischen Salzen von unter 1%, vorzugsweise von unter 0,25%, gewährleistet ist. Die auf sehr einfache Weise hergestellten Lösungen können ohne weitere Reinigung in den Handel gebracht werden.

Trotz der fehlenden Zwischenisolierung der Farbstoffe, die im allgemeinen zur Entfernung von nichtgekuppelten Zwischenprodukten oder Zersetzungsprodukten dient, werden einwandfreie Färberesultate erzielt, die in Ton und Echtheiten dem Standard nicht nachstehen, der mit den nach bisherigen Verfahren gereinigten Farbstoffen erzielt wird.

Dem Stand der Technik war nicht zu entnehmen, daß die simultane Diazotierung und Kupplung in hoher Konzentration ohne die Bildung von Zersetzungsprodukten — aus den Diazoniumsalzen — und Nebenprodukten — aus unerwünschten Kupplungen oder Nitrosierungen — in Carbonsäuren möglich ist. Außerdem liegt bisher keine brauchbare Lösung für die Entfernung des durch das Nitrit eingeschleppte Kation vor. Die bekannte Verwendung von Salpetersäureestern, oder die bekannten Umsetzungen stellen nur mit großem technischen Aufwand auszuführende Verfahren dar.

Es war darum nicht vorhersehbar, daß durch das erfindungsgemäße Verfahren, d. h. durch die Auswahl der Kupplungskomponente — die das Sulfat einer hydroxyalkylierten Ammoniumverbindung darstellt —, der salpetrige Säure liefernden Substanz und des Lösungsmittels, Bedingungen gefunden wurden, die gleichzeitig eine quantitative Umsetzung zum Farbstoff und eine nahezu vollständige Trennung der ausgefällten anorganischen Salze vom gelösten Farbstoff ermöglichen. Bei Variation nur eines der genannten Parameter können diese Vorteile nicht erzielt werden.

Die Farbstoffe der erfindungsgemäß herstellbaren Lösungen sind z. B. aus US-PS 4 036 826 und DE-OS 1 644 323 bekannt: Sie eignen sich bekanntermaßen zum Färben und Bedrucken von Fasern, Geweben und Vliesen aus Polymerisaten aus Acrylnitril oder 1,1-Dicyanethylen oder Mischpolymerisaten dieser Komponenten mit anderen Vinylverbindungen, wie Vinylchlorid, Vinylidenchlorid, Vinylacetat, Vinylpyridin, Vinylimidazol, Acrylsäure- und Methacrylsäureestern; aus sauer modifizierten Polyestern, wie sie beispielsweise in den US-Patentschriften 2 893 816, 3 018 272 und 3 166 531 beschrieben sind, und aus sauer modifizierten Polyamiden, wie sie beispielsweise in den US-Patentschriften 3 039 009 und 3 454 351 beschrieben sind.

Außerdem lassen sich mit diesen Farbstoffen auch Cellulosefasern und ligninhaltige Faserstoffe, wie sie zur Herstellung von Vliesen, saugfähigen Papieren, geleimten Schreib- und Packpapieren verwendet werden, hervorragend lichtecht anfärben. Besonders überraschend ist das gute Aufziehverhalten. Sie ziehen auch bei dem in der Papierherstellung üblichen Flottenverhältnis von 1 : 100—1000 vollständig auf und ergeben ein farbloses Abwasser.

Es ist bekannt, daß bestimmte Azofarbstoffe nach einstufigen Diazotierungs-Kupplungsverfahren hergestellt werden können.

In der US-PS 2 478 768 wird ein einstufiges Verfahren zur Herstellung von wasserunlöslichen Pigmenten beschrieben, in dem Diazotierung und Kupplung bei einem pH-Wert <6 durchgeführt

werden. Dabei werden wasserunlösliche Ba-Salze der Azofarbstoffe durch ständige Ausfällung weiteren Nebenreaktionen entzogen. Ein ähnliches Verfahren wird in US-PS 2 478 767 beschrieben, bei dem Diazotierung und Kupplung im pH-Bereich zwischen pH 6,0—7,2 gehalten werden.

US-PS 2 418 416 beschreibt ein Verfahren, bei dem die Diazotierung bei pH <4 und die Kupplung bei pH >4 erfolgt. Ein solches Verfahren kann zur Zersetzung eines Teils der Diazoverbindung vor der Kupplung führen.

DE-OS 1 927 453 beschreibt ein Verfahren zur Herstellung von metallfreien Azopigmenten durch Diazotierung und Kupplung in organischen Lösungsmitteln, die höchstens 10% Wasser enthalten. Dieses Verfahren verläuft in heterogener Phase.

DE-OS 2 058 299 beschreibt ein ähnliches Verfahren mit dem Unterschied, daß das Reaktionsgemisch wasserfrei ist und eine organische Säure mit einem pH-Wert <3 in einer Menge <1 Mol bezogen auf 1 Mol Amin zugesetzt wird. Durch die Reaktionsführung in wasserfreiem Medium ist es notwendig, die Ester der salpetrigen Säure einzusetzen. Diese müssen gesondert hergestellt und unter größten Vorsichtsmaßnahmen gehandhabt werden.

DE-AS 2 139 311 beschreibt ein Verfahren zur einstufigen Herstellung von Azofarbstoffen, wobei der pH-Wert für Diazotierung und Kupplung bei 4 oder niedriger liegt, wenn das Reaktionsgemisch mit 25% seines Volumens an Wasser verdünnt wird. Die Beispiele arbeiten mit Mengen von 17—127 Mol Essigsäure auf 1 Mol Amin, wodurch diese Verfahren zur Herstellung von konzentrierten Flüssigmarken nicht brauchbar sind.

GB-PS 2 009 208 beschreibt die gleichzeitige Diazotierung und Kupplung, von durch Pyridinium-chlorid substituierten Kupplungskomponenten in Essigsäure und Ethylenglykol bei pH-Wert von 2,8, wenn das Reaktionsgemisch mit 25% Wasser verdünnt wird. Eine Abtrennung der anorganischen Salze durch Filtration ist nicht möglich.

In der GB-PS 1 162 665 werden Diazotierung und Kupplung in saurer Lösung durchgeführt und die Farbstoffe ausgesalzen oder als $ZnCl_2$-Doppelsalz isoliert.

Beispiel 1

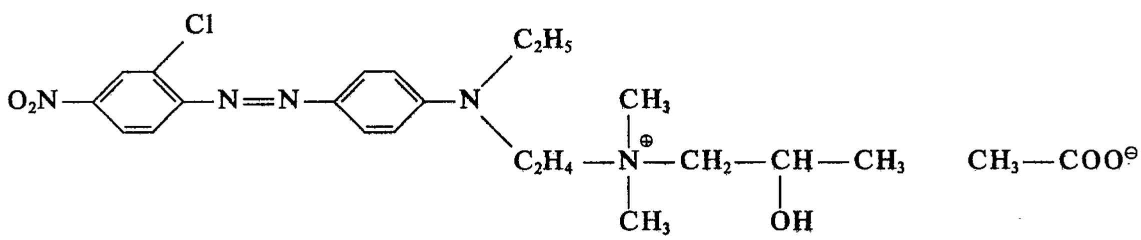

Eine Suspension von 1 Mol (226,2 g 76,25%ige wäßrige Einstellung) o-Chlor-p-nitranilin, 200 ml Eisessig (3,33 Mol) 1 Mol (479,2 g, 62,4%ige wäßrige Einstellung) N-Ethyl-N-(dimethyl-hydroxypropyl-ammonium)-ethyl-anilin-sulfat und 95 g 6-Caprolactam wird auf 5°C abgekühlt und mit 40%iger Natronlauge (ca. 40 ml) auf pH 4,5 eingestellt. Innerhalb von 120 Minuten werden 69 g Natriumnitrit (1 Mol) eingetragen. Nach weiteren 120 Minuten ist die gleichzeitige Diazotierung und Kupplung beendet. Das bei der Reaktion entstehende Natriumsulfat, welches über Nacht quantitativ ausfällt, wird durch Filtration abgetrennt. Am Ende der Reaktion liegt der pH-Wert bei 5,3. Man erhält 1,07 kg Farbstofflösung. Es entsteht ein roter Farbstoff in quantitativer Ausbeute.

Beispiel 2

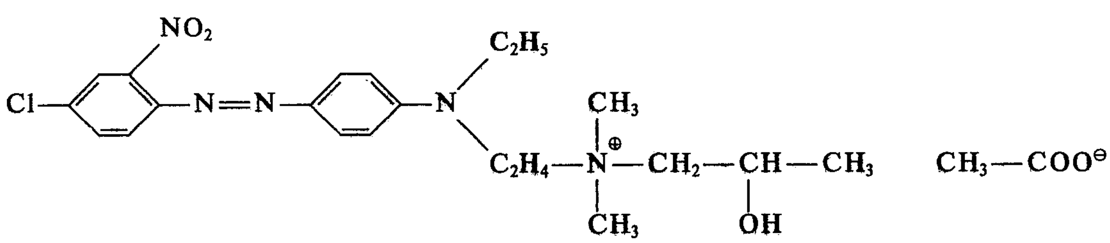

1 Mol (305,3 g 56%ige wäßrige Einstellung) p-Chlor-o-nitranilin, 1 Mol (479,2 g 62,4%ige wäßrige Einstellung) N-Ethyl-N-(dimethyl-hydroxypropyl-ammonium)-ethyl-anilin-sulfat, 95 g 6-Caprolactam und 1 Mol Natriumnitrit werden angerührt und auf eine Temperatur von 5°C abgekühlt. Der pH-Wert der 25% Wasser enthaltenden Suspension liegt bei 4,5. Während 3 Stunden werden 200 ml Eisessig zugetropft. Der pH-Wert steigt dabei bis 5,5 an. Diazotierung und Kupplung sind unmittelbar nach Zugabe der Essigsäure beendet. Um das bei der Reaktion entstehende Natriumsulfat quantitativ

auszufällen, wird 15 Stunden nachgerührt. Nach der Filtration erhält man 1 kg einer gelben Farbstofflösung. Die Ausbeute ist quantitativ.

Beispiel 3

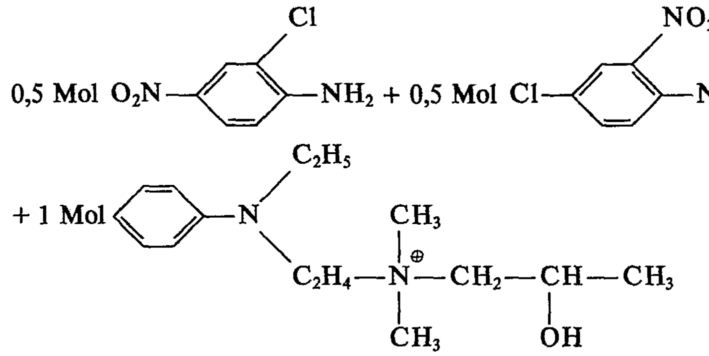

0,5 Mol ... + 0,5 Mol ... + 1 Mol ... 1/2 $SO_4^{2\ominus}$

0,5 Mol (113,1 g 75%ige wäßrige Einstellung) o-Chlor-p-nitranilin, 0,5 Mol (152,65 g 56,5%ige wäßrige Einstellung) p-Chlor-o-nitranilin, 1 Mol (479,2 g 62,4%ige wäßrige Einstellung) N-Ethyl-N-(dimethyl-hydroxypropyl-ammonium)-ethyl-anilin-sulfat, 67,8 g 6-Caprolactam und 132 ml Eisessig werden verrührt und auf 5° C abgekühlt. Der pH-Wert wird mit ca. 25 ml 40 Vol.-%iger Natronlauge auf 4,5 eingestellt. Innerhalb von 120 Minuten wird 1 Mol festes Natriumnitrit eingetragen. Diazotierung und Kupplung sind nach weiteren 120 Minuten beendet.

Das bei der Reaktion entstehende Natriumsulfat fällt über Nacht quantitativ aus und wird abfiltriert. Man erhält ca. 1 kg Farbstofflösung. Die Ausbeute ist quantitativ. Durch Variation der Molverhältnisse der beiden Chlornitranilins kann jede gewünschte Nuance von gelb bis rot hergestellt werden.

Beispiel 4

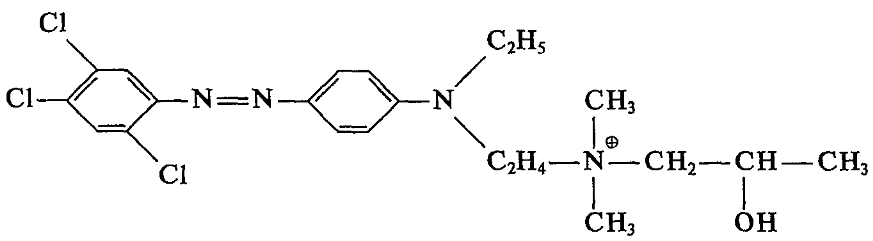

$CH_3-COO^{\ominus}$

1 Mol 2,4,5-Trichloranilin (260 g 75,5%ige wäßrige Einstellung), 1 Mol N-Ethyl-N-(dimethyl-hydroxypropylammonium)-ethyl-anilin-sulfat (479,2 g 62,4%ige wäßrige Einstellung) und 1 Mol Natriumnitrit werden verrührt und auf 5° C abgekühlt. pH: 6,2. Innerhalb von 180 Minuten werden 300 ml Eisessig in die Suspension eingetropft und 5 Stunden nachgerührt. Der pH-Wert ist am Ende der Reaktion 5,5. Nach Abtrennung der ungelösten Salze durch Filtration erhält man ca. 950 g einer gelben Farbstofflösung.

Beispiel 5

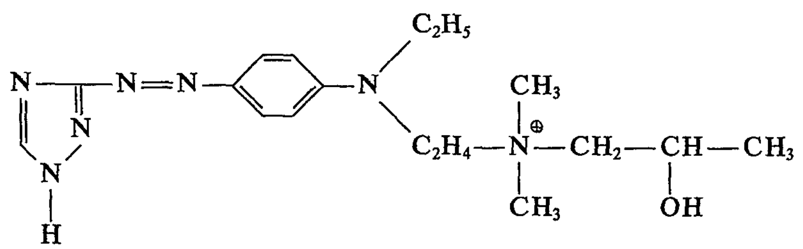

$CH_3-COO^{\ominus}$

1 Mol 3-Amino-1,2,4-triazol, 1 Mol N-Ethyl-N-(dimethylhydroxypropyl-ammonium)-ethyl-anilin-sulfat, (479,2 g 62,4%ige wäßrige Einstellung), 100 g 6-Caprolactam, 200 ml Eisessig werden verrührt und auf 65° C erwärmt. Es entsteht eine klare Lösung. Dann wird auf 10° C abgekühlt und 1 Mol Natriumnitrit zugesetzt. Innerhalb von 3 Stunden werden 100 ml $H_2O$ zugetropft. Durch Außenkühlung wird die Temperatur auf 10° C gehalten. Nach weiteren 3 Stunden sind Diazotierung und Kupplung beendet.

pH-Wert: 4,8. Das ausgefallene $Na_2SO_4$ wird durch Filtration abgetrennt. Man erhält eine stabile orangefarbene Lösung.

Beispiel 6

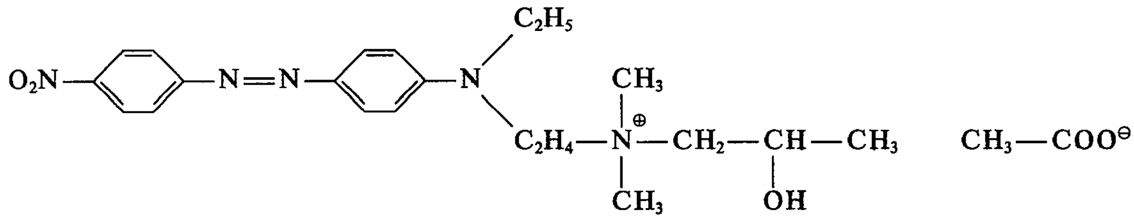

1 Mol p-Nitranilin (176 g 78,3%ige wäßrige Einstellung), 1 Mol N-Ethyl-N-(dimethyl-hydroxypropyl-ammonium)-ethyl-anilin (479,2 g 62,4%ige wäßrige Einstellung), 200 ml Eisessig und 100 g 6-Caprolactam werden verrührt und auf 5°C abgekühlt. Innerhalb von 2 Stunden wird 1 Mol Natriumnitrit zugesetzt. Diazotierung und Kupplung sind nach weiteren 2 Stunden beendet. pH-Wert: 4,7. Das ausgefallene $Na_2SO_4$ wird durch Filtration abgetrennt. Man erhält eine stabile rote Lösung.

Beispiel 7

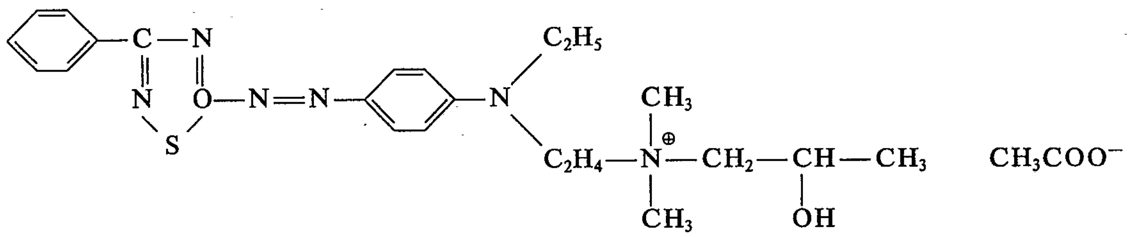

1 Mol 3-Phenyl-5-amino-1,2,4-thiadiazol (179,5 g 98,5%ige wäßrige Einstellung), 1 Mol N-Ethyl-N-(dimethyl-hydroxypropyl-ammonium)-ethyl-anilin-sulfat (479,2 g 62,4%ige wäßrige Einstellung) und 300 g Ethylenglykol werden verrührt und auf 5°C gekühlt. Nach Zugabe von 1 Mol $NaNO_2$ wird innerhalb von 3 Stunden ein Gemisch von 200 ml Eisessig und 60 ml $H_2O$ zugetropft. Der pH-Wert liegt dabei zwischen 3 und 4,5. Nach weiteren 2 Stunden sind Diazotierung und Kupplung beendet. Das ausgefallene $Na_2SO_4$ wird durch Filtration abgetrennt. Man erhält eine stabile rote Lösung.

Beispiel 8

1 Mol (226,2 g 76,25%ige wäßrige Einstellung), o-Chlor-p-nitranilin, 1 Mol (479,2 g 62,4%ige wäßrige Einstellung) N-Ethyl-N-(dimethyl-hydroxypropyl-ammonium)-ethyl-anilin-acetat, 1 Mol Eisessig, 0,5 Mol (51,1 g) Schwefelsäure und 100 g 6-Caprolactam werden verrührt und auf 5° C abgekühlt. Während 120 Minuten wird 1 Mol Natriumnitrit eingetragen. Nach weiteren 120 Minuten sind die gleichzeitige Diazotierung und Kupplung beendet. Das ausgefallene Natriumsulfat wird durch Filtration abgetrennt. Man erhält einen roten Farbstoff in quantitativer Ausbeute in einer stabilen hochkonzentrierten Lösung.

**Patentansprüche**

1. Verfahren zur Herstellung konzentrierter salzarmer, stabiler Lösungen kationischer Azofarbstoffe der Formel

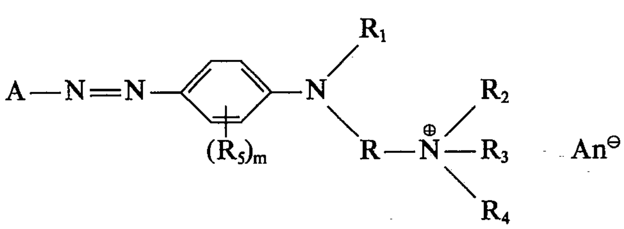

worin

A den Rest einer aromatisch-carbocyclischen oder aromatisch-heterocyclischen Diazokomponente,
R Alkylen,
$R_1$ Wasserstoff oder Alkyl,
$R_2$ Alkyl, Alkenyl oder Aralkyl,
$R_3$ Alkyl,
$R_4$ Hydroxyalkyl mit 2 und mehr C-Atomen,
$R_5$ Halogen, Alkyl, Alkoxy, Aryloxy, Acyl oder Acylamino,
m 0, 1, 2, 3 oder 4 und
$An^{(-)}$ ein Carboxylat-Ion bedeuten, und

worin die cyclischen und acyclischen Substituenten weitere nichtionische Substituenten tragen können,

aus Aminen der Formel

$$A-NH_2,$$

Kupplungskomponenten der Formel

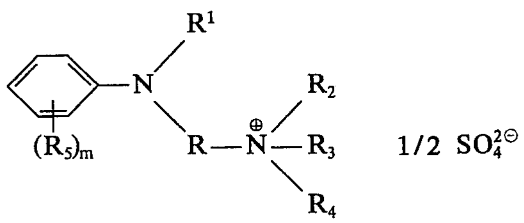

oder entsprechenden Hydroxiden oder Carboxylaten in Gegenwart äquivalenter Mengen Schwefelsäure und Alkali- oder Erdalkalinitriten in wäßrigen Carbonsäuren und gegebenenfalls organischen wasserlöslichen Lösungsmitteln, dadurch gekennzeichnet, daß man die Reaktionspartner gleichzeitig zur Reaktion bringt und die dabei auskristallisierenden Alkali- oder Erdalkalisulfate abtrennt.

2. Verfahren nach Anspruch 1, dadurch gekennzeichnet, daß man Lösungen herstellt, die

10—60 Gew.-% des kationischen Farbstoffs,
10—80 Gew.-% der wasserlöslichen Carbonsäure,
2—20 Gew.-% des wasserlöslichen organischen Lösungsmittels und
3—30 Gew.-% Wasser enthalten.

3. Verfahren nach Anspruch 1, dadurch gekennzeichnet, daß die Reaktionspartner in äquimolaren Mengen eingesetzt werden.

4. Verfahren nach Anspruch 1, dadurch gekennzeichnet, daß als Carbonsäure Essigsäure und gegebenenfalls als organisches Lösungsmittel Ethylenglykol oder Caprolactam verwendet werden.

**Claims**

1. Process for the preparation of concentrated stable solutions of cationic azo dyestuffs of the formula

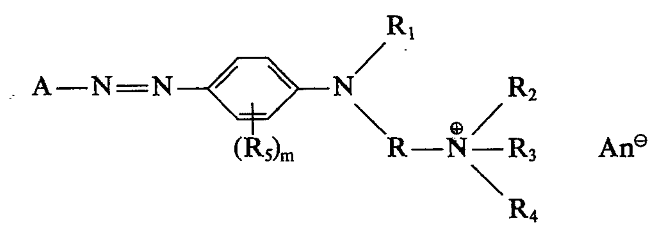

wherein

A denotes the radical of an aromatic-carbocyclic or aromatic-heterocyclic diazo component,
R denotes alkylene,
$R_1$ denotes hydrogen or alkyl,

$R_2$ denotes alkyl, alkenyl or aralkyl,
$R_3$ denotes alkyl,
$R_4$ denotes hydroxyalkyl with 2 or more C atoms,
$R_5$ denotes halogen, alkyl, alkoxy, aryloxy, acyl or acylamino,
m denotes 0, 1, 2, 3 or 4 and
$An^{(-)}$ denotes a carboxylate ion,

and wherein the cyclic and acyclic substituents can carry further non-ionic substituents, which solutions have a low salt content, from amines of the formula

$A-NH_2$,

coupling components of the formula

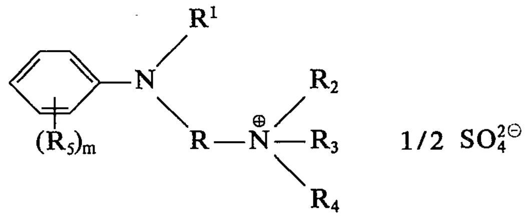

or corresponding hydroxides or carboxylates, in the presence of equivalent quantities of sulphuric acid and alkali metal nitrites or alkaline earth metal nitrites in aqueous carboxylic acids and, if appropriate, organic water-soluble solvents, characterised in that the reactants are reacted simultaneously and the alkali metal sulphates or alkaline earth sulphates which thereby crystallise out are separated off.

2. Process according to Claim 1, characterised in that solutions are prepared which contain

10—60% by weight of the cation dyestuff,
10—80% by weight of the water-soluble carboxylic acid,
2—20% by weight of the water-soluble organic solvent and
3—30% by weight of water.

3. Process according to Claim 1, characterised in that the reactants are employed in equimolar quantities.

4. Process according to Claim 1, characterised in that acetic acid is used as the carboxylic acid and, if appropriate, ethylene glycol or caprolactam is used as the organic solvent.

**Revendications**

1. Procédé de préparation de solutions concentrées, pauvres en sels, stables de colorants azoïques cationiques de formule:

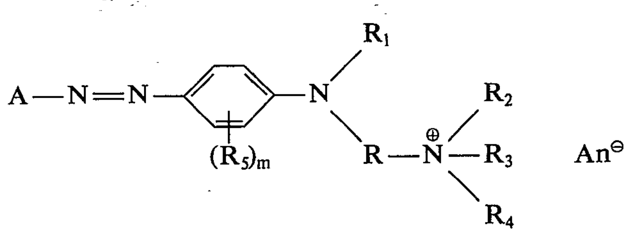

dans laquelle:

A représente le radical d'un composant diazotable carbocyclique aromatique ou hétérocyclique aromatique,
R est un radical alkylène,
$R_1$ est un atome d'hydrogène ou un groupe alkyle,
$R_2$ est un groupe alkyle, alcényle ou aralkyle,
$R_3$ est un groupe alkyle,
$R_4$ est un groupe hydroxyalkyle comportant 2 atomes de carbone et davantage,
$R_5$ représente un atome d'halogène ou un groupe alkyle, alcoxy, aryloxy, acyle ou acylamino,
m vaut 0, 1, 2, 3 ou 4 et
$An^{(-)}$ représente un ion carboxylate,

les substituants cycliques et acycliques pouvant porter d'autres substituants non ioniques,

à partir d'amines de formule

$A-NH_2$,

de copulants de formule:

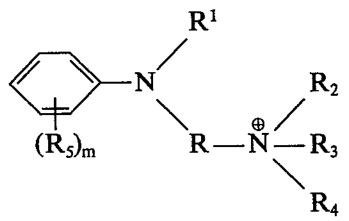

$1/2\ SO_4^{2\ominus}$

ou d'hydroxydes ou carboxylates correspondants en présence de quantités équivalentes de l'acide sulfurique et de nitrites alcalins ou alcalino-terreux dans des acides carboxyliques aqueux et éventuellement des solvants organiques hydrosolubles, procédé caractérisé en ce qu'on met simultanément en réaction les corps devant participer à la réaction et en ce qu'on sépare les sulfates alcalins ou alcalino-terreux qui ont cristallisé.

2. Procédé selon la revendication 1, caractérisé en ce que l'on prépare des solutions qui contiennent:

10 à 60% en poids du colorant cationique,
10 à 80% en poids de l'acide carboxylique hydrosoluble,
2 à 20% en poids du solvant organique hydrosolubles, et
3 à 30% en poids d'eau.

3. Procédé selon la revendication 1, caractérisé en ce qu'on utilise en des quantités équimolaires des corps devant participer à la réaction.

4. Procédé selon la revendication 1, caractérisé en ce qu'on utilise comme acide carboxylique l'acide acétique, et éventuellement comme solvant organique l'éthylèneglycol ou le caprolactame.